# EUROPEAN PATENT SPECIFICATION

(11) **EP 4 142 266 B1**
(45) Date of publication and mention of the grant of the patent: **30.07.2025**
(21) Application number: 22191836.0
(22) Date of filing: 24.08.2022
(51) Int. Cl.: H04L 69/164, H04L 69/22, H04L 67/14

(54) **DATA TRANSMISSION METHOD AND RELATED DEVICE**
DATENÜBERTRAGUNGSVERFAHREN UND ZUGEHÖRIGE VORRICHTUNG
PROCÉDÉ DE TRANSMISSION DE DONNÉES ET DISPOSITIF ASSOCIÉ

(30) Priority: 31.08.2021 CN 202111017185
(43) Date of publication of application: 01.03.2023
(73) Proprietor: Huawei Technologies Co., Ltd., Shenzhen, Guangdong 518129 (CN)
(72) Inventor: ZHANG, Yongkang, SHENZHEN, 518129 (CN); WANG, Haibo, SHENZHEN, 518129 (CN); LI, Zhenbin, SHENZHEN, 518129 (CN); CHEN, Shuanglong, SHENZHEN, 518129 (CN); ZHUANG, Shunwan, SHENZHEN, 518129 (CN)
(74) Representative: Körber, Martin Hans

(56) References cited:
- WO-A1-2020/155148

## Description

### TECHNICAL FIELD

This application relates to the field of data transmission technologies, and specifically, to a data transmission method and a related device.

### BACKGROUND

QUIC is an Internet transport layer protocol. For related descriptions of the QUIC transport protocol, refer to the RFC 9000 document. Details are not described in this application.

In current QUIC transport protocol-based data transmission, data between a transmit end and a receive end is transmitted in a form of a byte stream. To be specific, application messages submitted by an application of the transmit end to a QUIC entity of the transmit end are usually combined, then combined data is segmented into data frames based on a factor such as a network status of a QUIC connection, and then the data frames are transmitted to the receive end. When receiving the data frames, the receive end does not know an application message or even application messages to which data in the data frames belongs. Therefore, after receiving the data frames, the receive end needs to combine the received data frames and traverse the data in the combined data frames, to identify boundaries of each application message, so as to obtain the application message submitted by the application of the transmit end. An operation of identifying the boundaries of the application message in the received data may also be referred to as boundary check. Because the receive end needs to perform boundary check each time the receive end receives data frames, an information processing process is complex, and processing overheads are high. WO 2020/155148 A1 discloses a method for transmitting delay-sensitive data. The QUIC protocol is used encapsulate and transmit a message belonging to a delay-sensitive service flow. The QUIC protocol would help reducing the influence of packet loss, reducing delay, and improving user experience.

### SUMMARY

This application provides a data transmission method, to resolve a problem in current QUIC transport protocol-based data transmission that a processing process is complex because an application of a receive end needs to perform boundary check each time the receive end receives data. This application further provides a corresponding data reception method, apparatus, communication system, computer-readable storage medium, as defined by the independent claims.

A first aspect of this application provides a data transmission method, including: obtaining a first
application message generated by a target application, where the target application runs on a transmit end; encapsulating the first application message to obtain a first data frame, where the first data frame includes a first frame type identifier, and the first frame type identifier indicates that an application message included in the first data frame is a complete application message; transmitting the first data frame to a receive end based on an established QUIC connection to the receive end, to enable the receive end to determine, based on the first frame type identifier, that the application message included in the first data frame is a complete application message, where a target application runs on the receive end.

The solution provided in the first aspect may be applied to a transmit end in a communication system. The communication system includes the transmit end and a receive end. The transmit end is a communication device that sends data, and the transmit end may be a server, a terminal device, a virtual machine (virtual machine, VM), or a container (container). The receive end is a communication device that receives data, and the receive end may be a server, a terminal device, a virtual machine, or a container. A QUIC connection may be established between the transmit end and the receive end, and a data frame encapsulated with an application message is transmitted based on the established QUIC connection. The transmit end and the receive end may each include an application layer (application layer) and a transport layer (transport layer). A target application may run at the application layer, and the target application may perform data transmission based on an application layer protocol such as a Hypertext Transfer Protocol (Hyper Text Transfer Protocol, HTTP). A QUIC entity may run at the transport layer of the transmit end. An entity (entity) represents any hardware or software process that can send or receive information, and may be a specific software module. The QUIC entity may be an entity that executes a QUIC transport protocol.

A first application message needs to be encapsulated in a form of a complete application message. That the first application is encapsulated in a form of a complete application message means: The corresponding first application message is not segmented during encapsulation, but is completely encapsulated into a data frame. In this solution, complete encapsulation of the first application message is implemented based on the first data frame. In an actual application, the transmit end may determine, based on a first frame type identifier, whether a corresponding data frame is the first data frame, and the receive end may determine, by identifying whether a received data frame includes the first frame type identifier, whether the data frame is the first data frame. A quantity of complete application messages included in the first data frame is not limited herein. One first data frame may include only one first application message, or may include a plurality of first application messages. In this application, "a plurality of" includes two or more, or may be described as at least two.

In the solution provided in the first aspect, a process of establishing the QUIC connection between the transmit end and the receive end may be based on related content in the RFC 9000 document. In addition, a new transport parameter (transport parameter) may be further added, and the transmit end and the receive end negotiate, based on the new transport parameter, whether the receive end has a capability of processing the first data frame. For example, if a new transport parameter is added to the QUIC transport protocol as a first parameter, in the process of establishing the QUIC connection between the transmit end and the receive end, if the transmit end receives first parameter information (for example, a value of the first parameter) sent by the receive end, the transmit end determines that the receive end has the capability of processing the first data frame. Therefore, after the QUIC connection is established, the transmit end may encapsulate the first application message to obtain the first data frame, and may transmit the first data frame to the receive end.

In the solution provided in the first aspect, after obtaining the first application message generated by the target application of the transmit end, the transmit end encapsulates the first application message to obtain the first data frame, where the first data frame includes the first frame type identifier, and the first frame type identifier indicate s that the application message included in the first data frame is a complete application message, that is, the first application message may be completely encapsulated into the first data frame, so that completeness of the first application message can still be maintained after the first application message is encapsulated into the first data frame. Therefore, when the first data frame is sent to the receive end based on the QUIC connection, complete information of the first application message is transmitted based on the first data frame. After receiving the first data frame, the receive end may determine, based on the first frame type identifier, that the application message included in the first data frame is a complete application message, so as to conveniently obtain the complete first application message in the first data frame, and the receive end does not need to combine data frames and traverse combined information to search for boundaries of an application message to obtain the corresponding application message. In this way, information processing overheads can be reduced, and an information processing process of the receive end can be optimized.

In a possible implementation of the first aspect, the obtaining a first application message generated by a target application in the foregoing step includes: obtaining the first application message based on a target threshold and application data generated by the target application, where a size of the first application message does not exceed the target threshold.

In this possible implementation, the target threshold may be preset, and used to limit the size of the first application message, so as to ensure completeness of the first application message in a transmission process as much as possible, and meet a requirement of the target application of the receive end for processing an application message. The target threshold may be determined by the QUIC entity of the transmit end, and then transferred to the target application of the transmit end.

In a possible implementation of the first aspect, the method further includes: receiving first parameter information sent by the receive end, where the first parameter information includes a maximum data amount of an application message that the target application of the receive end expects to receive; and determining the target threshold based on the first parameter information.

The first parameter may be preconfigured in the QUIC transport protocol as a transport parameter (transport parameter) in the QUIC transport protocol, and the first parameter information may include a name and a value of the first parameter. The receive end may assign a value to the first parameter, so that the value of the first parameter is obtained, and then the receive end sends the value of the first parameter to the transmit end. The receive end may send the first parameter information to the transmit end in a process of establishing the QUIC connection between the receive end and the transmit end, or may send the first parameter information to the transmit end after the QUIC connection between the receive end and the transmit end is established. The value of the first parameter may be a fixed value, or may dynamically change based on a change status of a data processing resource of the target application. In a specific example, in the process of establishing the QUIC connection between the receive end and the transmit end, the receive end may send the first parameter information to the transmit end, to negotiate the capability of processing the first data frame and determine the first parameter information, so that the first application message generated by the transmit end meets the requirement of the target application of the receive end for processing the application message.

In a possible implementation of the first aspect, the method further includes: determining the target threshold based on second parameter information, where the second parameter information includes at least one of information about a flow control parameter, information about a path maximum transmission unit parameter of the transmit end, and information about a congestion window parameter of the transmit end.

In this possible implementation, the target threshold is determined based on at least one of the information about the flow control parameter, the information about the path maximum transmission unit parameter of the transmit end, and the information about the congestion window parameter of the transmit end, so that the transmit end can limit the size of the first application message based on the target threshold. In this way, the size of the first application message can meet a requirement on a data transmission capability in the QUIC connection, and a possibility of segmentation during transmission through the QUIC connection is reduced.

In a possible implementation of the first aspect, the method further includes: obtaining an updated target threshold; and obtaining a second application message based on the updated target threshold and the application data generated by the target application, where a size of the second application message does not exceed the updated target threshold, and the size of the second application message is different from the size of the first application message.

In this possible implementation, because the updated target threshold is different from the target threshold before the update, the size of the second application message is also different from the size of the first application message. The second application message obtained based on the updated target threshold also needs to be encapsulated in a form of a complete application message. Therefore, a data frame including the first frame type identifier may also be obtained by encapsulating the second application message. In this possible implementation, the target threshold may be dynamically updated, so that a size of an application message that needs to be completely encapsulated can also be dynamically adjusted, to improve a possibility that the application message remains complete in a data transmission process.

In a possible implementation of the first aspect, the foregoing step of encapsulating the first application message to obtain a first data frame includes: if the size of the first application message is not greater than that of a send window, encapsulating the first application message to obtain the first data frame, where the send window indicates an amount of data that can be sent by the transmit end based on the QUIC.

In this possible implementation, the size of the send window may be determined based on at least one of the flow control parameter, the path maximum transmission unit, and the congestion window. If the size of the send window is less than that of the first application message, even though the first application message is encapsulated in a form of a complete application message, the first application message is segmented due to limitation of the send window in a QUIC connection-based transmission process, and then segments are separately transmitted. Therefore, in this possible implementation, if the size of the first application message is not greater than that of the send window, the first application message is encapsulated to obtain the first data frame. In this case, in the QUIC connection-based transmission process, the first data frame is not limited by the send window, and therefore is not segmented, so that completeness of an application message in the first data frame can be ensured in the transmission process.

In a possible implementation of the first aspect, the first application message includes a first message identifier, and the first message identifier indicates to encapsulate the first application message in a form of a complete application message.

In this possible implementation, the first message identifier may be set in a header structure of the first application message, so that the QUIC entity of the transmit end identifies the first message identifier. Other application information different from the first application information may include a message identifier different from the first message identifier, or may not include a message identifier. This possible implementation provides a feasible method for identifying the first application message.

In a possible implementation of the first aspect, the first application message is transferred from the target application to a QUIC entity at a transport layer through a first programming interface, and an application message transferred through the first programming interface is encapsulated in a form of a complete application message.

Layers in a network hierarchy of the transmit end usually interact with each other and provide services through interfaces. The target application is located at the application layer in the network hierarchy, and the QUIC entity that performs an operation related to the QUIC transport protocol is located at the transport layer in the network hierarchy. The first programming interface may be configured between the target application at the application layer and the QUIC entity at the transport layer, and the QUIC entity of the transmit end may use the application message received through the first programming interface as the first application message. An application message received by invoking the first programming interface once may be used as one first application message, and the size of the first application message is a size of the application message received by the QUIC entity through the first programming interface in the invoking. This possible implementation provides a feasible method for identifying the first application message.

In a possible implementation of the first aspect, the method further includes: obtaining a third application message generated by the target application; encapsulating the third application message to obtain a second data frame, where the second data frame does not include the first frame type identifier; and transmitting the second data frame to the receive end based on the established QUIC connection, to enable the receive end to identify boundaries of the third application message from the second data frame, to obtain the third application message.

In this possible implementation, the third application message may be segmented in the QUIC connection-based transmission process. That the second data frame does not include the first frame type identifier may mean: The second data frame does not include a frame type identifier, or the second data frame includes a second frame type identifier, where the second frame type identifier is different from the first frame type identifier. In this possible implementation, based on the QUIC connection established between the transmit end and the receive end, not only the first data frame but also the second data frame can be sent. Therefore, the target application of the transmit end may generate the first application message and the third application message based on specific scenario requirements, obtain the first data frame based on the first application message, and obtain the second data frame based on the third application message. This improves flexibility of processing the application messages by the target application, and can meet requirements of the target application in different application scenarios.

In a possible implementation of the first aspect, the first data frame includes a first number, the second data frame includes a second number, and the first number and the second number correspond to a sequence in which the first application message included in the first data frame and the third application message included in the second data frame are generated by the target application.

In this possible implementation, to ensure that the application messages can be correctly restored by the receive end without byte disorder or the like after the application messages are encapsulated into the data frames and received by the receive end, correctness of a sequence between bytes of the first application message and bytes of the second application message needs to be ensured. In this case, the first number of the first data frame corresponding to the first application message and the second number of the second data frame corresponding to the second application message are obtained based on the sequence in which the first application message and the second application message are generated by the target application, so that the receive end can accurately determine the sequence between the bytes of the first application message and the bytes of the second application message, to obtain corresponding sequential application data.

In a possible implementation of the first aspect, the first data frame and the second data frame are included in a same QUIC packet.

The QUIC connection between the transmit end and the receive end transmits data such as a data frame by using a QUIC packet (packet). For descriptions of the packet (packet) in the QUIC transport protocol, refer to the RFC 9000 document. In this possible implementation, a feasible manner of sending the first data frame and the second data frame is provided. To be specific, in some scenarios, the first data frame and the second data frame may be included in the same QUIC packet for sending. Each time the transmit end sends a QUIC packet based on the QUIC connection, a size of the QUIC packet may be determined based on the size of the send window. In a specific example, the size of the send window is 200 bytes (bytes), a size of a first data frame A is 150 bytes, and a size of a second data frame B is 50 bytes. In this scenario, the first data frame A and the second data frame B may be included in a same QUIC packet for sending.

A second aspect of this application provides a data transmission method, including: receiving, based on an established QUIC connection to a transmit end, a first data frame sent by the transmit end, where the first data frame is obtained by the transmit end by encapsulating a first application message generated by a target application, the first data frame includes a first frame type identifier, the first frame type identifier indicates that an application message included in the first data frame is a complete application message, and target applications run on the transmit end and a receive end; and obtaining the first application message from the first data frame based on the first frame type identifier.

The solution provided in the second aspect is applied to a receive end corresponding to the transmit end in the first aspect. The receive end may be a physical machine (for example, a terminal device or a server), or may be a virtual machine or a container. For a feature that is in the second aspect and that is the same as that in the first aspect, refer to the descriptions of the first aspect for understanding.

In the solution provided in the second aspect, after receiving the first data frame, the receive end may determine, based on the first frame type identifier, that the application message included in the first data frame is a complete application message, so as to conveniently obtain the complete first application message in the first data frame, and the receive end does not need to combine data frames and traverse combined information to search for boundaries of an application message to obtain the corresponding application message. In this way, information processing overheads can be reduced, and an information processing process of the receive end can be optimized.

In a possible implementation of the second aspect, the method further includes: sending first parameter information to the transmit end, where the first parameter information includes a maximum data amount of an application message that the target application of the receive end expects to receive, the first parameter information is used by the transmit end to determine a target threshold, and a size of the first application message does not exceed the target threshold.

In this possible implementation, a first parameter may be preconfigured in a QUIC transport protocol as a transport parameter (transport parameter) in the QUIC transport protocol, and the first parameter information may include a name and a value of the first parameter. The receive end may assign a value to the first parameter, so that the value of the first parameter is obtained, and then the receive end sends the value of the first parameter to the transmit end. The receive end may send the first parameter information to the transmit end in a process of establishing the QUIC connection between the receive end and the transmit end, or may send the first parameter information to the transmit end after the QUIC connection between the receive end and the transmit end is established. The value of the first parameter may be a fixed value, or may dynamically change based on a change status of a data processing resource of the target application. In a specific example, in the process of establishing the QUIC connection between the receive end and the transmit end, the receive end may send the first parameter information to the transmit end, to negotiate the capability of processing the first data frame and determine the first parameter information, so that the first application message generated by the transmit end meets the requirement of the target application of the receive end for processing the application message.

In a possible implementation of the second aspect, after the obtaining the first application message from the first data frame based on the first frame type identifier, the method further includes: transferring the obtained first application message to the target application of the receive end through a first programming interface.

In this possible implementation, the first programming interface may be configured between the target application at an application layer of the receive end and a QUIC entity at a transport layer of the receive end, and the target application of the receive end may determine data obtained through the first programming interface as the received first application message. The first programming interface of the receive end may be configured to transfer only the first application message, so that the target application of the receive end can determine that the information received through the first programming interface is a complete application message, and does not need to search the information for boundaries of the application message. In this way, efficiency of processing the application message by the receive end can be improved.

In a possible implementation of the second aspect, the method further includes: receiving, based on the established QUIC connection, a second data frame sent by the transmit end, where the second data frame is obtained by encapsulating a third application message generated by the target application of the transmit end, and the second data frame does not include the first frame type identifier; and identifying boundaries of the third application message from the second data frame, to obtain the third application message.

The third application message may be segmented in a QUIC connection-based transmission process. That the second data frame does not include the first frame type identifier may mean: The second data frame does not include a frame type identifier, or the second data frame includes a second frame type identifier, where the second frame type identifier is different from the first frame type identifier. In this possible implementation, based on the QUIC connection established between the transmit end and the receive end, not only the first data frame but also the second data frame can be sent. Therefore, the target application of the transmit end may generate the first application message and the third application message based on specific scenario requirements, obtain the first data frame based on the first application message, and obtain the second data frame based on the third application message. This improves flexibility of processing the application messages by the target application, and can meet requirements of the target application in different application scenarios.

In a possible implementation of the second aspect, the first data frame and the second data frame each include a frame type identifier field, the frame type identifier field of the first data frame includes the first frame type identifier, the frame type identifier field of the second data frame includes a second frame type identifier, and the second frame type is different from the first frame type identifier.

In the QUIC transport protocol, a structure of a frame may include a plurality of fields. For example, fields that respectively indicate a length, content, a frame type of a corresponding frame, and an ID of a stream (stream) in which the frame is located may exist. A frame type identifier field may exist. A value of the frame type identifier field is used to determine the frame type of the corresponding frame, and the value of the frame type identifier field may be used as a corresponding frame type identifier. In embodiments of this application, structures of the first data frame and the second data frame may be the same, in other words, structures (for example, field meanings, locations in the data frames, and field lengths) of included fields may be the same, but values of frame type identifier fields used to determine frame types are different. In this possible implementation, the frame type of the data frame may be identified based on the value of the frame type identifier field.

A third aspect of this application provides a transmit end apparatus for data transmission. The transmit end apparatus has a function of implementing the method in any one of the first aspect or the possible implementations of the first aspect. The function may be implemented by hardware, or may be implemented by hardware executing corresponding software. The hardware or software includes one or more modules corresponding to the foregoing function, for example, an application module and a QUIC module.

A fourth aspect of this application provides a receive end apparatus for data transmission. The receive end apparatus has a function of implementing the method in any one of the second aspect or the possible implementations of the second aspect. The function may be implemented by hardware, or may be implemented by hardware executing corresponding software. The hardware or software includes one or more modules corresponding to the foregoing function, for example, an application module and a QUIC module.

A fifth aspect of this application provides a computer-readable storage medium storing one or more computer-executable instructions. When the computer-executable instructions are executed by a processor, the processor performs the method according to any one of the first aspect or the possible implementations of the first aspect.

A sixth aspect of this application provides a computer-readable storage medium storing one or more computer-executable instructions. When the computer-executable instructions are executed by a processor, the processor performs the method according to any one of the second aspect or the possible implementations of the second aspect.

A seventh aspect of this application provides a computer program product storing one or more computer-executable instructions. When the computer-executable instructions are executed by a processor, the processor performs the method according to any one of the first aspect or the possible implementations of the first aspect.

An eighth aspect of this application provides a computer program product storing one or more computer-executable instructions. When the computer-executable instructions are executed by a processor, the processor performs the method according to any one of the second aspect or the possible implementations of the second aspect.

For technical effects brought by any one of the third aspect, the fifth aspect, and the seventh aspect or the possible implementations thereof, refer to technical effects brought by the first aspect or the different possible implementations of the first aspect. For technical effects brought by any one of the fourth aspect, the sixth aspect, and the eighth aspect or the possible implementations thereof, refer to technical effects brought by the second aspect or the different possible implementations of the second aspect. Details are not described herein again.

### BRIEF DESCRIPTION OF DRAWINGS

FIG. 1A is a schematic diagram of an embodiment of interaction between a transmit end and a receive end according to an embodiment of this application;
FIG. 1B is a schematic diagram of another embodiment of interaction between a transmit end and a receive end according to an embodiment of this application;
FIG. 2 is a schematic diagram of an embodiment of a communication system according to an embodiment of this application;
FIG. 3 is a schematic diagram of an embodiment of a data transmission method according to an embodiment of this application;
FIG. 4 is a schematic diagram of another embodiment of a data transmission method according to an embodiment of this application;
FIG. 5 is a schematic diagram of still another embodiment of a data transmission method according to an embodiment of this application;
FIG. 6 is a schematic diagram of an embodiment of a transmit end apparatus for data transmission according to an embodiment of this application;
FIG. 7 is a schematic diagram of an embodiment of a receive end apparatus for data transmission according to an embodiment of this application;
FIG. 8 is a schematic diagram of a structure of a transmit end according to an embodiment of this application;
FIG. 9 is a schematic diagram of a structure of a receive end according to an embodiment of this application; and
FIG. 10 is a schematic diagram of a structure of a communication system according to an embodiment of this application.

### DESCRIPTION OF EMBODIMENTS

The following describes embodiments of this application with reference to the accompanying drawings. It is clear that the described embodiments are merely some but not all of embodiments of this application. A person of ordinary skill in the art may learn that, with technical development and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the data termed in such a way are interchangeable in an appropriate circumstance, so that embodiments described herein can be implemented in another order other than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Embodiments of this application provides a data transmission method, to resolve a problem in current QUIC transport protocol-based data transmission that a processing process is complex because an application of a receive end needs to perform boundary check each time the receive end receives data. Embodiments of this application further provide a corresponding apparatus, computer device, computer-readable storage medium, computer program product, and the like. Details are separately described below.

A QUIC transport protocol is an Internet transport layer protocol. For related descriptions of the QUIC transport protocol, refer to the RFC 9000 document.

The data transmission method provided in embodiments of this application may be applied to various QUIC transport protocol-based communication systems, for example, a computer network, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a 5G communication system.

The communication system includes a transmit end and the receive end. A QUIC connection may be established between the transmit end and the receive end.

The transmit end is a communication device that sends data, and the receive end is a communication device that receives data. The transmit end may be a terminal device, or may be a server, a virtual machine (virtual machine, VM), or a container (container). The receive end may be a terminal device, or may be a server, a virtual machine (virtual machine, VM), or a container (container).

For example, the terminal device may be a mobile phone (mobile phone), a tablet computer (pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a wireless terminal in an internet of things (internet of things, IoT), or the like.

It should be noted that the transmit end and the receive end are relative concepts. For example, when a first communication device sends data to a second communication device, the first communication device is a transmit end, and the second communication device is a receive end. When the second communication device sends data to the first communication device, the second communication device is a transmit end, and the first communication device is a receive end. When the first communication device sends data to the second communication device and receives data sent by the second communication device, both the first communication device and the second communication device are a transmit end and a receive end. In embodiments of this application, the data sent by the transmit end may include application data generated by a target application.

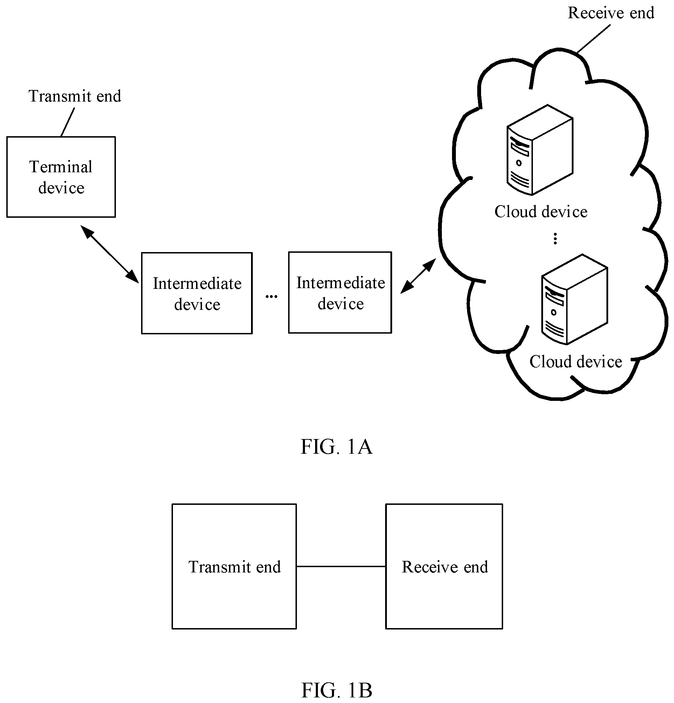

In an example, the transmit end and the receive end may be connected via an intermediate device. For example, in a scenario shown in FIG. 1A, the transmit end may be a terminal device, the receive end may be a cloud device, and data may be forwarded between the terminal device and the cloud device via one or more intermediate devices, so as to implement data transmission between the transmit end and the receive end. The intermediate device may forward a QUIC packet transmitted between the transmit end and the receive end. For example, the intermediate device may be a hub, a switch, a router, or the like. Certainly, in another scenario, the transmit end may be a cloud device, and the receive end may be a terminal device.

In another example, as shown in FIG. 1B, the transmit end and the receive end may be directly connected. In this example, the transmit end may be a client, a server, or an intermediate device that forwards data, and the receive end may be a client, a server, or an intermediate device between the client and the server.

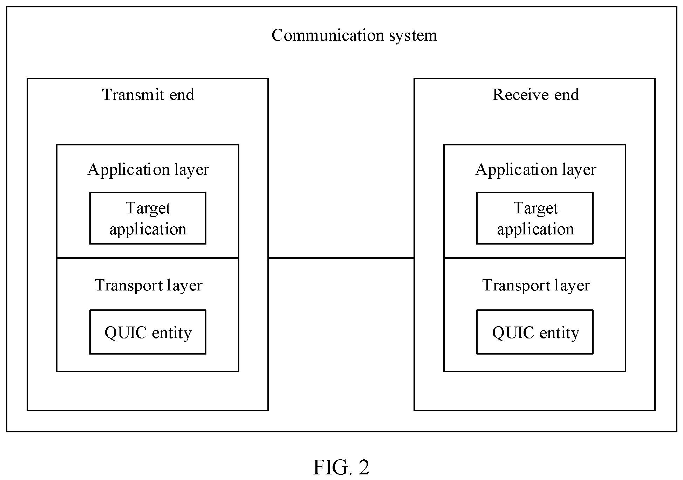

A network architecture of the transmit end and receive end generally complies with a specific hierarchical model, for example, an open systems interconnection (open systems interconnection, OSI) reference model. As shown in FIG. 2, a transmit end is used as an example. In embodiments of this application, the transmit end may include an application layer (application layer) and a transport layer (transport layer). A target application may run at the application layer, and the target application may perform data transmission based on an application layer protocol such as a Hypertext Transfer Protocol (Hyper Text Transfer Protocol, HTTP). A QUIC entity may run at the transport layer of the transmit end, and the QUIC entity is based on the QUIC transport protocol. In addition, the transmit end may further include, for example, a network layer (network layer), a data link layer (data link layer), or a physical layer (physical layer) based on an Internet Protocol (Internet Protocol, IP). A specific structure of the hierarchical model of the transmit end is not limited herein. The hierarchical structure of the receive end may also include an application layer and a transport layer. The target application may run at the application layer of the receive end. The transport layer of the receive end may include a QUIC entity, and the QUIC entity is based on the QUIC transport protocol. In addition, other layers of the receive end may be the same as or different from those of the transmit end.

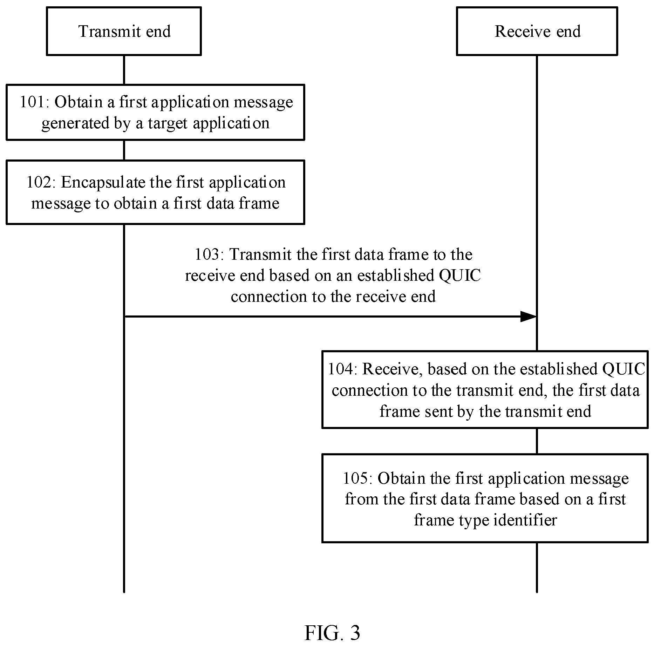

An embodiment of the data transmission method provided in embodiments of this application may be applied to the foregoing communication system. The following describes the data transmission method provided in embodiments of this application with reference to the accompanying drawings. As shown in FIG. 3, an embodiment of the data transmission method provided in embodiments of this application includes the following steps.

101: A transmit end obtains a first application message generated by a target application.

The target application is an application running at an application layer. A specific type of the target application, a used application protocol, and the like are not limited herein. Target applications may run on the transmit end and a receive end. Application information of the target application of the transmit end may be sent to the target application of the receive end through a QUIC connection established between the transmit end and the receive end.

A type of data included in the first application message is not limited herein.

In embodiments of this application, the target application may generate the first application message based on application data, and then a QUIC entity of the transmit end obtains the first application message from the target application. An entity (entity) represents any hardware or software process that can send or receive information, and may be a specific software module. The QUIC entity may be an entity that executes a QUIC transport protocol.

In embodiments of this application, the first application message needs to be encapsulated in a form of a complete application message. That the first application is encapsulated in a form of a complete application message means: The corresponding first application message is not segmented during encapsulation, but is completely encapsulated into a data frame. The target application may identify, based on a particular identifier, an application message that needs to be encapsulated in a form of a complete application message, so that when receiving the application message, the QUIC entity may determine, based on the particular identifier, that the first application message is received. In addition, the target application may further transfer, to the QUIC entity through a particular interface, the application message that needs to be encapsulated in a form of a complete application message, so that when receiving the application message through the particular interface, the QUIC entity may determine, based on the particular interface, that the first application message is received. In addition, the QUIC entity may determine, in another manner, that the first application message is received. For example, the target application may transfer notification information to the QUIC entity in advance, where the notification information is used to notify the QUIC entity that all application messages sent by the target application are first application messages.

The target application may determine, based on factors such as a scenario, a size of an application message, and a type of an application message, messages that each need to be encapsulated in a form of a complete application message. For example, the target application may use a control message as the first application message, and use application messages obtained by segmenting a large file such as an image, a video, or a document as application messages that do not need to be encapsulated in a form of complete application messages. Alternatively, the target application may use application data whose size is less than a specified threshold as the first application message, and use application data whose size is greater than the specified threshold as an application message that does not need to be encapsulated in a form of a complete application message. A manner in which the target application generates the first application message is not limited herein.

It should be noted that, in embodiments of this application, obtaining the first application message from the target application may be a general description. In a specific processing process, other processing may be further performed on the first application message. For example, in an actual processing process, the first application message generated by the target application may be stored in a send buffer (send buffer), and the QUIC entity may read the first application message from the send buffer. In addition, in this example, when the first application message is stored in the send buffer (send buffer), different first application messages may be separately stored in different storage nodes. For example, if a storage structure of the send buffer is a linked storage structure, each first application message may be stored in the send buffer as an independent linked list node, and different first application messages correspond to different linked list nodes.

102: The transmit end encapsulates the first application message to obtain a first data frame.

The first data frame includes a first frame type identifier, and the first frame type identifier indicates that an application message included in the first data frame is a complete application message.

In embodiments of this application, the first frame type identifier indicates that the application message included in the first data frame is a complete application message. Therefore, the first application information included in the first data frame is complete, and is not segmented into different data frames. A quantity of complete application messages included in the first data frame is not limited herein. One first data frame may include only one first application message, or may include a plurality of first application messages. Complete encapsulation of the first application message may be implemented based on the first data frame.

If one first application message is correspondingly encapsulated into one first data frame so that one first data frame corresponds to one first application message, when the receive end detects the first frame type identifier, an application message obtained by decapsulating the first data frame is a complete first application message, and the receive end does not need to obtain the first application message by identifying boundary information of the included application message from the decapsulated data.

If one first data frame includes a plurality of first application messages, the first data frame may not only include the first frame type identifier, but also record, in a specified field of a header structure of the first data frame, an offset (offset) of each first application message in the first data frame and/or length information of each first application message. After receiving the first data frame, if identifying the first frame type identifier, the receive end may read the offset of each first application message in the first data frame and/or the length information from the specified field in the header structure, so that the receive end completely extracts each first application message in the first data frame based on the offset and/or the length information.

For a data structure of the first data frame, refer to a structure of a frame (frame) in the RFC 9000 document. A frame type in the RFC 9000 document may include a data frame (for example, a STREAM frame) and a control frame (for example, an ACK frame, a PADDING frame, an RST_STREAM frame, or a PING frame). In an example, the data structure of the first data frame may be the same as that of the STREAM frame in the RFC 9000 document, to be specific, field meaning, locations in the data frame, field lengths, and the like of fields in the first data frame may be the same as those of the STREAM frame. Values of the fields in the first data frame may be the same as or different from those in the STREAM frame. For example, values of frame type identifier fields used to determine frame types may be different. Certainly, in another example, the data structure of the first data frame may alternatively be another structure different from that of the STREAM frame.

103: The transmit end transmits the first data frame to the receive end based on the established QUIC connection to the receive end.

For a process of establishing the QUIC connection between the transmit end and the receive end, refer to the RFC 9000 document. In embodiments of this application, the transmit end and the receive end may establish the QUIC connection based on related content in the RFC 9000 document. In addition, a new transport parameter (transport parameter) may be further added, and the transmit end and the receive end negotiate, based on the new transport parameter, whether the receive end has a capability of processing the first data frame. For example, if a new transport parameter is added to the QUIC transport protocol as a first parameter, in the process of establishing the QUIC connection between the transmit end and the receive end, if the transmit end receives first parameter information (for example, a value of the first parameter) sent by the receive end, the transmit end determines that the receive end has the capability of processing the first data frame. Therefore, after the QUIC connection is established, the transmit end may encapsulate the first application message to obtain the first data frame, and may transmit the first data frame to the receive end.

The transmit end may directly transmit the first data frame to the receive end, or may transmit the first data frame to the receive end via an intermediate device such as a router.

104: The receive end receives, based on the established QUIC connection to the transmit end, the first data frame sent by the transmit end.

In embodiments of this application, the first data frame sent by the transmit end may be received by the QUIC entity of the receive end.

105: The receive end obtains the first application message from the first data frame based on the first frame type identifier.

The receive end may determine, based on the first frame type identifier, that the received data frame is the first data frame, so as to determine that an application message included in the received data frame is a complete application message.

In embodiments of this application, the first application message may be obtained from the first data frame via the QUIC entity of the receive end.

Specifically, in embodiments of this application, after receiving the first data frame, the receive end may decapsulate the first data frame based on the data structure corresponding to the first data frame, to obtain the application message encapsulated in the first data frame. When decapsulating the first data frame, the receive end may read the first frame type identifier that is in the first data frame. Therefore, the receive end may determine, based on the first frame type identifier, that the application message included in the first data frame is a complete application message, so that the corresponding first application message can be conveniently obtained from the first data frame. For example, if one first data frame corresponds to one first application message, the application message obtained by decapsulating the first data frame may be determined as one first application message. If the first data frame includes a plurality of complete first application messages, each corresponding first application message may be conveniently obtained from the first data frame based on the offset of each first application message in the header structure of the first data frame.

In some examples, after obtaining the first application message, the receive end may store the obtained first application message in a receiving buffer. If the first application message and an application message that is recently transferred to the target application of the receive end are consecutive application messages, the QUIC entity of the receive end reads the first application message from the receiving buffer, and transfers the first application message to the target application of the receive end. That the first application message and an application message that is recently transferred to the target application of the receive end are consecutive application messages means: The transmit end generates the first application message in a sequence next to generating the application message that is recently transferred to the target application of the receive end.

In this example, when the first application message obtained by the receive end is stored in the receiving buffer (receiving buffer), different first application messages may be separately stored in different storage nodes. For example, if a storage structure of the receiving buffer is a linked storage structure, each received first application message may be stored in the receiving buffer as an independent linked list node, and different first application messages correspond to different linked list nodes.

In some other examples, if the QUIC entity of the receive end receives specific indication instructions of the target application of the receive end, each time the QUIC entity of the receive end obtains the first application message, the QUIC entity of the receive end may directly send the obtained first application message to the target application of the receive end, and does not need to store the first application message in a receiving buffer. The indication instructions may instruct the QUIC entity of the receive end to directly transmit the first data frame to the target application of the receive end after obtaining the first application message. In this way, processing efficiency can be improved in a scenario in which a requirement on ensuring a data packet sequence is low, for example, a video live broadcast scenario.

When the QUIC entity of the receive end transfers the obtained first application message to the target application of the receive end, to maintain completeness of the first application message, the QUIC entity of the receive end may transfer each first application message by using a different event (event), or may transfer different first application messages by using a same event, where the different first application messages are distinguished based on different identifiers in the same event. Alternatively, the target application of the receive end may obtain different first application messages by invoking a callback function.

It can be learned that in embodiments of this application, after obtaining the first application message generated by the target application of the transmit end, the transmit end may completely encapsulate the first application message into the first data frame, so that completeness of the first application message can still be maintained after the first application message is encapsulated into the first data frame. Therefore, when the first data frame is sent to the receive end based on the QUIC connection, complete information of the first application message is transmitted based on the first data frame. After receiving the first data frame, the receive end may determine, based on the first frame type identifier, that the application message included in the first data frame is a complete application message, so as to conveniently obtain the complete first application message in the first data frame, and the receive end does not need to combine data frames and traverse combined information to search for boundaries of an application message to obtain the corresponding application message. In this way, information processing overheads can be reduced, and an information processing process of the receive end can be optimized.

Optionally, step 101 may include:
obtaining the first application message based on a target threshold and application data generated by the target application, where a size of the first application message does not exceed the target threshold.

A specific type and a generation manner of the application data are not limited herein. For example, the application data may include at least one of control information, text information, image information, and audio information. The application data may be data generated in a running process of the target application of the transmit end, may be data locally obtained by the target application from the transmit end, or may be data obtained by the target application of the transmit end from another device.

In embodiments of this application, to ensure completeness of the first application message in a subsequent transmission process as much as possible and meet a requirement of the target application of the receive end for processing an application message, the target threshold may be preset to limit the size of the first application message.

The target threshold may be determined by the QUIC entity of the transmit end, and then transferred to the target application of the transmit end.

A manner of determining the target threshold may include but is not limited to at least one of the following two manners.
1. In an embodiment, the target threshold is determined based on the first parameter information.

The first parameter information includes a maximum data amount of an application message that the target application of the receive end expects to receive.

The first parameter information may be information preconfigured in the target application of the receive end, or may be determined based on information such as a size of a processing resource allocated by the target application of the receive end to the application message.

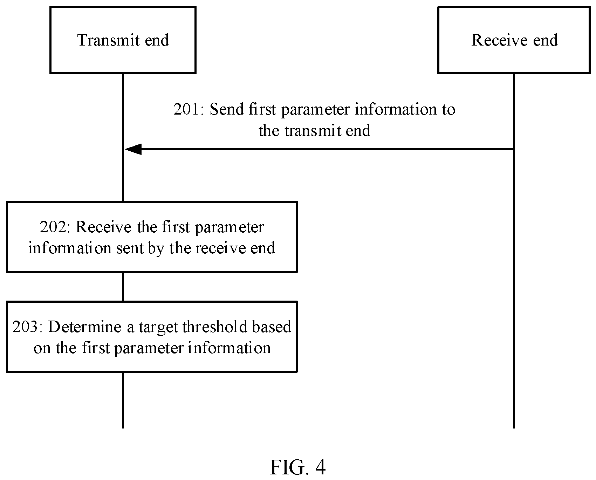

Optionally, as shown in FIG. 4, in a data transmission method provided in this embodiment of this application, before step 101 is performed, an embodiment of determining the target threshold includes the following steps.

201: The receive end sends the first parameter information to the transmit end.

202: The transmit end receives the first parameter information sent by the receive end.

203: The transmit end determines the target threshold based on the first parameter information.

In some examples, the first parameter may be preconfigured in the QUIC transport protocol as a transport parameter (transport parameter) in the QUIC transport protocol, and the first parameter information may include a name and a value of the first parameter. The receive end may assign a value to the first parameter, so that the value of the first parameter is obtained, and then the receive end sends the value of the first parameter to the transmit end. The receive end may send the first parameter information to the transmit end in a process of establishing the QUIC connection between the receive end and the transmit end, or may send the first parameter information to the transmit end after the QUIC connection between the receive end and the transmit end is established. The value of the first parameter may be a fixed value, or may dynamically change based on a change status of a data processing resource of the target application. Each time the receive end detects that the value of the first parameter changes, the receive end may send an updated value of the first parameter to the transmit end.

In a specific example, in the process of establishing the QUIC connection between the receive end and the transmit end, the receive end may send the first parameter information to the transmit end, to negotiate the capability of processing the first data frame and determine the first parameter information, so that the first application message generated by the transmit end meets the requirement of the target application of the receive end for processing the application message.

For the process of establishing the QUIC connection between the receive end and the transmit end, refer to the RFC 9000 document. In this example, the first parameter may be a transport parameter (transport parameter) newly defined in the QUIC transport protocol. In the QUIC transport protocol, a definition and a processing rule of the first parameter may be preconfigured. For example, an occasion and a manner of declaring the first parameter in the process of establishing the QUIC connection between the receive end and the transmit end are configured. In an example, the receive end may send, to the transmit end in an encryption handshake phase, a declaration carrying the first parameter. The declaration may include the value of the first parameter of the receive end. If the transmit end receives the declaration of the first parameter, the transmit end may determine that the receive end has a capability of identifying and processing a data frame including the first frame type identifier, and the transmit end may determine the value of the first parameter of the receive end, and determine the target threshold based on the value of the first parameter, so that the target application of the transmit end can limit a size of application information based on the value of the first parameter, and the application message can be encapsulated into a first data frame that meets the requirement of the target application of the receive end.

2. In an embodiment, the target threshold is determined based on second parameter information.

The second parameter information includes at least one of information about a flow control parameter, information about a path maximum transmission unit parameter of the transmit end, and information about a congestion window parameter of the transmit end.

The flow control parameter is a parameter related in a flow control (flow control) process. The flow control parameter may include a size, namely, an amount of data that can be received in the receiving buffer, of an idle space in the receiving buffer corresponding to the QUIC entity of the receive end. Information such as a value of the flow control parameter may be sent by the receive end to the transmit end. The receive end may dynamically send the value of the flow control parameter to the transmit end based on a change of a size of the receiving buffer. It can be learned that the information about the flow control parameter in the transmit end may be dynamically updated.

In a network connection, in a period of time, if a requirement on resources (such as a link capacity, and a buffer and a processor in a switching node such as a router) in a network is greater than an available resource, congestion is caused. Therefore, in the QUIC transport protocol, a congestion control algorithm is used to avoid network congestion. The congestion control algorithm may be used to control a size of a congestion window, to control a data sending amount based on the size of the congestion window, so that congestion control is implemented. In embodiments of this application, the congestion control algorithm used in the QUIC transport protocol is not limited. For example, the congestion control algorithm may be a NewReno congestion control algorithm described in RFC 5681 or RFC 6582, or may be a cubic congestion control algorithm described in RFC 8312. Certainly, another algorithm may be selected as the congestion control algorithm based on a scenario requirement. The congestion control algorithm may be executed by the transmit end, and the size of the congestion window determined based on the congestion control algorithm may be considered as information about a local parameter of the transmit end.

The path maximum transmission unit (path maximum transmission unit, PMTU) may refer to a maximum size of an internet protocol (Internet Protocol) packet. In embodiments of this application, to avoid fragmentation of a QUIC packet in a transmission process at a network layer, a data link layer, or the like, the size of the first application message generated by the target application needs to be limited based on the path maximum transmission unit, so as to ensure that the first application message is not fragmented and is completely encapsulated into the first data frame in the transmission process. The path maximum transmission unit may be determined based on a maximum transmission unit (maximum transmission unit, MTU) of each of at least one transmission node on a transmission path on which the application message is transmitted from the transmit end to the receive end. The at least one transmission node may include at least one of the application layer of the transmit end, a data transport layer of the transmit end, and an intermediate device such as a router on a QUIC connection-based transmission path between the transmit end and the receive end. A size of the path maximum transmission unit may be determined based on a characteristic of the transmission path. Therefore, generally, the size of the path maximum transmission unit may dynamically change based on a change of the transmission path.

Because the flow control parameter, the path maximum transmission unit parameter of the transmit end, and the congestion window of the transmit end can reflect a data transmission capability in the QUIC connection, the target threshold is determined based on at least one of the information about the flow control parameter, the information about the path maximum transmission unit parameter of the transmit end, and the information about the congestion window parameter of the transmit end, so that the transmit end can limit the size of the first application message based on the target threshold. In this way, the size of the first application message can meet a requirement on the data transmission capability in the QUIC connection, and a possibility of segmentation during transmission through the QUIC connection is reduced.

It should be noted that the target threshold may be determined only based on the first parameter information, or may be determined only based on at least one of the information about the flow control parameter, the information about the path maximum transmission unit parameter of the transmit end, and the information about the congestion window parameter of the transmit end, or may be determined based on at least one of the first parameter information, the information about the flow control parameter, the information about the path maximum transmission unit parameter of the transmit end, and the information about the congestion window parameter of the transmit end. In addition, a factor for determining the target threshold is not limited thereto. In some examples, the target threshold may be alternatively determined based on a factor such as limitation on an encapsulation format of the QUIC packet.

Optionally, in an embodiment, the method further includes:
obtaining an updated target threshold; and
obtaining a second application message based on the updated target threshold and the application data generated by the target application, where a size of the second application message does not exceed the updated target threshold, and the size of the second application message is different from the size of the first application message.

In embodiments of this application, the target threshold may be dynamically updated. The transmit end may actively and periodically obtain parameter information (for example, the first parameter information and/or the second parameter information) related to the target threshold, to determine whether to update the target threshold based on the parameter information related to the target threshold. Alternatively, the transmit end may passively update the target threshold based on updated first parameter information and/or updated second parameter information after receiving an update message of, for example, the first parameter information and/or the second parameter information. After obtaining the updated target threshold, the transmit end may obtain the second application message based on the updated target threshold and the application data generated by the target application. Because the updated target threshold is different from the target threshold before the update, the size of the second application message is also different from the size of the first application message. The second application message obtained based on the updated target threshold also needs to be encapsulated in a form of a complete application message. Therefore, a data frame including the first frame type identifier may also be obtained by encapsulating the second application message. For processing of the second application message, refer to processing of the first application message in another embodiment of this application. Details are not described herein again. In embodiments of this application, the target threshold may be dynamically updated, so that a size of an application message that needs to be completely encapsulated can also be dynamically adjusted, to improve a possibility that the application message remains complete in a data transmission process.

Optionally, in some embodiments, the foregoing step 102 may include:
if the size of the first application message is not greater than that of a send window, encapsulating the first application message to obtain the first data frame, where the send window indicates an amount of data that can be sent by the transmit end based on the QUIC.

The size of the send window may be determined based on at least one of the flow control parameter, the path maximum transmission unit, and the congestion window.

In actual application, the size of the send window may dynamically change in real time with parameters such as the flow control parameter, the path maximum transmission unit, and the congestion window. In addition, update frequency of the parameters such as the flow control parameter, the path maximum transmission unit, and the congestion window is usually high. In some cases, when the first application message is generated, the size of the first application message is limited based on the parameter related to the send window. However, because the update frequency of the parameter related to the send window is high, a size of a send window that exists before the first application message is generated may be different from a size of a send window that exists when the first application message is encapsulated. If the size of the send window is less than that of the first application message, even though the first application message is encapsulated in a form of a complete application message, the first application message is segmented due to limitation of the send window in a QUIC connection-based transmission process, and then segments are separately transmitted. Therefore, in this possible implementation, if the size of the first application message is not greater than that of the send window, the first application message is encapsulated to obtain the first data frame. In this case, in the QUIC connection-based transmission process, the first data frame is not limited by the send window, and therefore is not segmented, so that completeness of an application message in the first data frame can be ensured in the transmission process.

In some examples, if the size of the first application message is greater than that of the send window, the first application information cannot be completely sent in current data transmission due to limitation of the send window. Consequently, the first application message cannot be encapsulated into the first data frame. Instead, the first application message is encapsulated into data frames of another frame type. When the first application message is encapsulated into the data frames of another frame type, to meet a limitation condition of the send window, the first application message needs to be segmented, and different parts of the first application message are encapsulated into different data frames for transmission.

Optionally, a manner of identifying the first application message may include but is not limited to the following two types.
1. In an embodiment, the first application message includes a first message identifier, and the first message identifier indicates to encapsulate the first application message in a form of a complete application message.
   The first message identifier may be set in a header structure of the first application message, so that the QUIC entity of the transmit end identifies the first message identifier. Other application information different from the first application information may include a message identifier different from the first message identifier, or may not include a message identifier.
2. In another embodiment, the first application message is transferred from the target application to the QUIC entity at the transport layer through a first programming interface, and an application message transferred through the first programming interface is encapsulated in a form of a complete application message.

Layers in a network hierarchy of the transmit end usually interact with each other and provide services through interfaces. The target application is located at the application layer in the network hierarchy, and the QUIC entity that performs an operation related to the QUIC transport protocol is located at the transport layer in the network hierarchy. The first programming interface may be configured between the target application at the application layer and the QUIC entity at the transport layer, and the QUIC entity of the transmit end may use the application message received through the first programming interface as the first application message. An application message received by invoking the first programming interface once may be used as one first application message, and the size of the first application message is a size of the application message received by the QUIC entity through the first programming interface in the invoking.

It should be noted that the first message identifier or the first programming interface represents an indication of an encapsulation manner of the target application of the transmit end for the first application message, and the indication indicates that the target application of the transmit end expects the first application message to be encapsulated in a form of a complete application message. However, generally, there is no limited requirement that the first application message can be encapsulated only in a form of a complete application message. For example, when the first application message is encapsulated, if it is detected that the size of the send window is updated to a value less than the size of the first application message, the first application message may be encapsulated in a form of another data frame different from the first data frame, and the first application message is no longer required to be encapsulated in a form of a complete application message.

Optionally, in some embodiments, the transmit end may further send another data frame other than the first data frame.

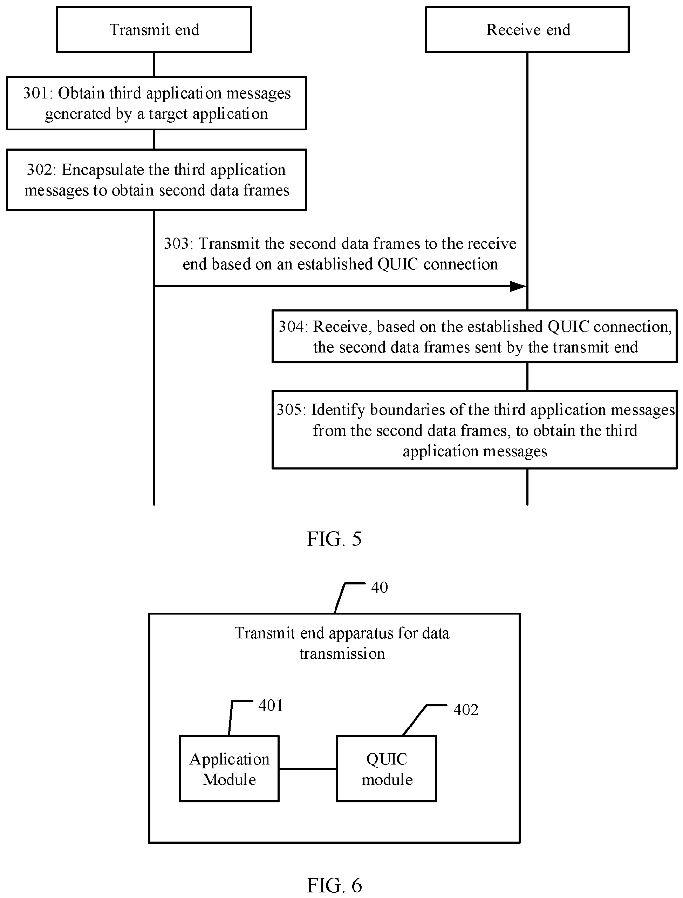

As shown in FIG. 5, in an embodiment, the data transmission method further includes the following steps.

301: A transmit end obtains third application messages generated by a target application.

The third application messages may be obtained through segmentation in a QUIC connection-based transmission process.

In embodiments of this application, the target application of the transmit end may determine, based on information such as a type and a size of application information, whether to generate a first application message based on application data or generate the third application message based on application data, or generate both the first application message and the third application message.

For example, in a scenario, if current to-be-transmitted application data is a large file, image, or video, in a transmission process, the application data definitely needs to be segmented into a plurality of application messages for transmission, and each segmented application message is a string of bytes without another data structure. After receiving the plurality of application messages, a receive end needs to combine the plurality of application messages to obtain the corresponding file, image, or video. In this case, completeness of each application message does not need to be specially maintained during transmission. In this case, the target application of the transmit end may obtain the third application messages based on the application data corresponding to the large file, image, or video.

If current to-be-transmitted application data is a control message of the target application of the transmit end, the target application may obtain the first application message based on the control message, to expect to maintain a complete data structure of the control message and maintain completeness of the control message in a QUIC transmission process, so that a target application of a receive end can conveniently obtain a complete application message, thereby reducing processing overheads.

302: The transmit end encapsulates the third application messages to obtain second data frames.

The second data frame does not include a first frame type identifier. This may mean that the second data frame does not include a frame type identifier, or the second data frame includes a second frame type identifier, where the second frame type identifier is different from the first frame type identifier.

For example, a frame type of the second data frame may be a frame type defined in the QUIC transport protocol, for example, a STREAM frame. Alternatively, the second data frame may be of another frame type extended based on the QUIC transport protocol. This is not limited in embodiments of this application.

Before the transmit end encapsulates the third application messages, the third application messages may be combined and stored in a send buffer of the transmit end. The "combined and stored" may mean that the third application messages are stored in a same storage node. After the plurality of third application messages are combined and stored, the combined and stored data is segmented based on a constraint condition such as a send window, to obtain the second data frames.

303: The transmit end transmits the second data frames to the receive end based on an established QUIC connection.

304: The receive end receives, based on the established QUIC connection, the second data frames sent by the transmit end.

305: The receive end identifies boundaries of the third application messages from the second data frames, to obtain the third application messages.

After obtaining the second data frames, a QUIC entity of the receive end may store the second data frames in a receiving buffer. In the receiving buffer, based on a sequence in which the third application messages respectively corresponding to the second data frames are generated on the transmit end, an arrangement sequence of the second data frames during combination may be determined, and a sequence in which the second data frames in the receiving buffer are sent to the target application of the receive end may be determined. Generally, the sequence in which the second data frames in the receiving buffer are sent to the target application of the receive end is consistent with the generation sequence of the third application messages corresponding to the second data frames. In other words, the second data frames in the receiving buffer are generally uploaded strictly in the generation sequence of the third application messages.

After receiving the third data frame transferred by the QUIC entity of the receive end, the target application of the receive end identifies the boundaries of the third application messages from the second data frames, to obtain the third application messages. The second data frames are obtained by segmenting the combined and stored data based on the constraint condition such as the send window after the plurality of third application messages are combined and stored. In this case, it is difficult to record segmentation manners of the third application messages in the second data frames. Therefore, after receiving the second data frames, the receive end needs to identify the boundaries of the included third application messages in the second data frames, so as to obtain the corresponding third application messages.

In embodiments of this application, based on a QUIC connection established between a transmit end and a receive end, not only a first data frame but also a second data frame can be sent. Therefore, a target application of the transmit end may generate a first application message and a third application message based on specific scenario requirements, obtain the first data frame based on the first application message, and obtain the second data frame based on the third application message. This improves flexibility of processing the application messages by the target application, and can meet requirements of the target application in different application scenarios.

In some embodiments, the first data frame includes a first number, the second data frame includes a second number, and the first number and the second number correspond to a sequence in which the first application message included in the first data frame and the third application message included in the second data frame are generated by the target application.

In embodiments of this application, the target application may generate the first application message and the third application message. To help the receive end identify a sequence of the application information and help the target application of the receive end process the application messages, the first data frame corresponding to the first application message and the second data frame corresponding to the third application message may be numbered based on the generation sequence of the first application message and the third application message, to obtain the first number of the first data frame and the second number of the second data frame.

To ensure that the application messages can be correctly restored by the receive end without byte disorder or the like after the application messages are encapsulated into the data frames and received by the receive end, correctness of a sequence between bytes of the first application message and bytes of the second application message needs to be ensured. In this case, the first number of the first data frame corresponding to the first application message and the second number of the second data frame corresponding to the second application message are obtained based on the sequence in which the first application message and the second application message are generated by the target application, so that the receive end can accurately determine the sequence between the bytes of the first application message and the bytes of the second application message, to obtain corresponding sequential application data.

In some examples, the first application message and the third application message may be associated information. For example, the first application message and the second application message may be different parts in a file. In this case, the first application message and the second application message are messages that are associated with each other. Therefore, after receiving the first application message and the second application message, the receive end needs to determine the sequence between the bytes of the first application message and the bytes of the second application message, to determine an association between the first application message and the second application message. To help the receive end identify the first application message and the third application message that are associated with each other, the first data frame corresponding to the first application message and the second data frame corresponding to the third application message that are associated with the first application message may be included in a same stream (stream). In addition, correctness of a sequence relationship between the bytes of the first application message and the bytes of the second application message is ensured based on numbers in the same stream. Each stream may be identified based on an ID field in the stream. For details about a stream, refer to the RFC 9000 document.

Optionally, the first data frame and the second data frame are included in a same QUIC packet.

The QUIC connection between the transmit end and the receive end transmits data such as a data frame by using a QUIC packet (packet). For descriptions of the packet (packet) in the QUIC transport protocol, refer to the RFC 9000 document. In embodiments of this application, a feasible manner of sending the first data frame and the second data frame is provided. To be specific, in some scenarios, the first data frame and the second data frame may be included in the same QUIC packet for sending. Each time the transmit end sends a QUIC packet based on the QUIC connection, a size of the QUIC packet may be determined based on a size of the send window. In a specific example, the size of the send window is 200 bytes (bytes), so that the size of the QUIC packet cannot exceed 200 bytes. A size of a first data frame A1 is 150 bytes, and a size of a second data frame B1 is 50 bytes. In this scenario, the first data frame A1 and the second data frame B1 may be included in a same QUIC packet for sending.

Certainly, in some other scenarios, a QUIC packet may include only the first data frame or only the second data frame. For example, if the size of the send window is 200 bytes (bytes), the size of the QUIC packet cannot exceed 200 bytes. However, a size of a first data frame A2 is 150 bytes, and a size of a second data frame B2 is 80 bytes. In this scenario, if the first data frame A2 and the second data frame B2 are included in a same QUIC packet, a size of the QUIC packet exceeds that of the send window. Consequently, the QUIC packet is segmented during transmission, and completeness of an application message in the first data frame A2 cannot be ensured. Therefore, in this scenario, a QUIC packet C1 may include the first data frame for sending, and when a QUIC packet C2 is sent next time based on the QUIC connection, the QUIC packet C2 includes the second data frame B2 for sending.

Optionally, after the receive end obtains the first application message from the first data frame based on the first frame type identifier, the method further includes the following step.

The receive end transfers the obtained first application message to the target application of the receive end through a first programming interface.

In embodiments of this application, the first programming interface may be configured between the target application at an application layer of the receive end and a QUIC entity at a transport layer of the receive end, and the target application of the receive end may determine data obtained through the first programming interface as the received first application message. The first programming interface of the receive end may be configured to transfer only the first application message, so that the target application of the receive end can determine that the information received through the first programming interface is a complete application message, and does not need to search the information for boundaries of the application message. In this way, efficiency of processing the application message by the receive end can be improved. In addition, another programming interface different from the first programming interface may be further configured between the QUIC entity of the receive end and the target application of the receive end, to transmit a data frame that does not include the first frame type identifier.

Optionally, in some embodiments, the first data frame and the second data frame each include a frame type identifier field, the frame type identifier field of the first data frame includes the first frame type identifier, the frame type identifier field of the second data frame includes a second frame type identifier, and the second frame type is different from the first frame type identifier.

In the QUIC transport protocol, a structure of a frame may include a plurality of fields. For example, fields that respectively indicate a length, content, a frame type of a corresponding frame, and an ID of a stream (stream) in which the frame is located may exist. A frame type identifier field may exist. A value of the frame type identifier field is used to determine the frame type of the corresponding frame, and the value of the frame type identifier field may be used as a corresponding frame type identifier. In embodiments of this application, structures of the first data frame and the second data frame may be the same, in other words, structures (for example, field meanings, locations in the data frames, and field lengths) of included fields may be the same, but values of frame type identifier fields used to determine frame types are different. In this way, the frame type of the data frame may be identified based on the value of the frame type identifier field.

For example, if the second data frame is a STREAM frame (STREAM Frame) in the QUIC, an example structure of the second data frame is as follows:

```
          STREAM Frame {
                    Type (i) = 0x08..0x0f,
                    Stream ID (i),
                    [Offset (i)],
                    [Length (i)],
                    Stream Data (..),
                 }
```

"Type" is a frame type identifier field that describes a frame type, and a second frame type identifier of the second data frame may be 0x08...0x0f. "Stream ID" is a field describing an ID of a stream (stream) in which the frame is located. "Stream Data" is a field describing an application message included in the frame. "Offset" is a field describing a number of "Stream Data", namely, a field describing the second number corresponding to the second data frame. "Length" is a field describing a byte length of "Stream Data".

In an example, the first data frame may be preconfigured, to enable the structure of the first data frame to be the same as the structure of the second data frame, but the values of the frame type identifier fields to be different.

If a frame type corresponding to the first frame type identifier is named as an ATOM frame (ATOM Frame), an example structure of the first data frame is as follows:

```
          ATOM Frame {
                    Type (i) = 0x1f,
                    Stream ID (i),
                    [Offset (i)],
                    [Length (i)],
                    Stream Data (..),
                 }
```

"Type" is a frame type identifier field. In this example, the first frame type identifier of the first data frame is 0x1f. It may be understood that, the frame type corresponding to the first data frame may also be named in another manner, and the ATOM frame is merely used as a specific example of the name; and a value of the first frame type identifier of the first data frame may also be another value. These are not limited herein.

The foregoing embodiments of this application describe the data transmission method from a plurality of aspects. The following describes a transmit end apparatus for data transmission and a receive end apparatus for data transmission in this application with reference to the accompanying drawings.

As shown in FIG. 6, an embodiment of this application provides a transmit end apparatus 40 for data transmission. The transmit end apparatus 40 for data transmission may be the transmit end in the foregoing embodiments, or may include some hardware modules and/or software modules of the transmit end in the foregoing embodiments.

An embodiment of the transmit end apparatus 40 for data transmission includes an application module 401 and a QUIC module 402.

The application module 401 is configured to:
transfer a first application message generated by a target application to the QUIC module 402, where the target application runs on a transmit end.

The QUIC module 402 is configured to:
receive the first application message;
encapsulate the first application message to obtain a first data frame, where the first data frame includes a first frame type identifier, and the first frame type identifier indicates that an application message included in the first data frame is a complete application message; and
transmit the first data frame to a receive end based on an established QUIC connection to the receive end, to enable the receive end to determine, based on the first frame type identifier, that the application message included in the first data frame is a complete application message, where a target application runs on the receive end.

In this embodiment of this application, the application module 401 may be located at an application layer of the transmit end, and the target application of the transmit end may run in the application module. The QUIC module 402 may be located at a transport layer of the transmit end, and the QUIC module 402 may include a QUIC entity.

In the solution provided in this embodiment of this application, after obtaining the first application message generated by the target application of the transmit end, the QUIC module 402 of the transmit end encapsulates the first application message to obtain the first data frame, where the first data frame includes the first frame type identifier, and the first frame type identifier indicates that the application message included in the first data frame is a complete application message, that is, the first application message may be completely encapsulated into the first data frame, so that completeness of the first application message can still be maintained after the first application message is encapsulated into the first data frame. Therefore, when the first data frame is sent to the receive end based on the QUIC connection, complete information of the first application message is transmitted based on the first data frame. In this way, after receiving the first data frame, the receive end may determine, based on the first frame type identifier, that the application message included in the first data frame is a complete application message, so as to conveniently obtain the complete first application message in the first data frame, and the receive end does not need to combine data frames and traverse combined information to search for boundaries of an application message to obtain the corresponding application message. In this way, information processing overheads can be reduced, and an information processing process of the receive end can be optimized.

Optionally, the first application message includes a first message identifier, and the first message identifier indicates to encapsulate the first application message in a form of a complete application message.

Optionally, the first application message is transferred from the target application to the QUIC entity at the transport layer through a first programming interface, and an application message transferred through the first programming interface is encapsulated in a form of a complete application message.

Optionally, the application module 401 is further configured to:
obtain the first application message based on a target threshold and application data generated by the target application, where a size of the first application message does not exceed the target threshold.

Optionally, the QUIC module 402 is further configured to:
receive first parameter information sent by the receive end, where the first parameter information includes a maximum data amount of an application message that the target application of the receive end expects to receive;
determine the target threshold based on the first parameter information; and
transfer the target threshold to the application module 401.

The application module 401 is further configured to:
receive the target threshold.

Optionally, the QUIC module 402 is further configured to:
determine the target threshold based on second parameter information, where the second parameter information includes at least one of information about a flow control parameter, information about a path maximum transmission unit parameter of the transmit end, and information about a congestion window parameter of the transmit end; and
transfer the target threshold to the application module 401.

The application module is further configured to:
receive the target threshold.

Optionally, the QUIC module 402 is further configured to:
obtain an updated target threshold; and
obtain a second application message based on the updated target threshold and the application data generated by the target application, where a size of the second application message does not exceed the updated target threshold, and the size of the second application message is different from the size of the first application message.

Optionally, the QUIC module 402 is configured to:
if the size of the first application message is not greater than that of a send window, encapsulate the first application message to obtain the first data frame, where the send window indicates an amount of data that can be sent by the transmit end based on the QUIC.

Optionally, the application module 401 is further configured to:
send a third application message generated by the target application to the QUIC module 402.

The QUIC module 402 is further configured to:
receive the third application message;
encapsulate the third application message to obtain a second data frame, where the second data frame does not include the first frame type identifier; and
transmit the second data frame to the receive end based on the established QUIC connection, to enable the receive end to identify boundaries of the third application message from the second data frame, to obtain the third application message.

Optionally, the first data frame includes a first number, the second data frame includes a second number, and the first number and the second number correspond to a sequence in which the first application message included in the first data frame and the third application message included in the second data frame are generated by the target application.

Optionally, the first data frame and the second data frame are included in a same QUIC packet.

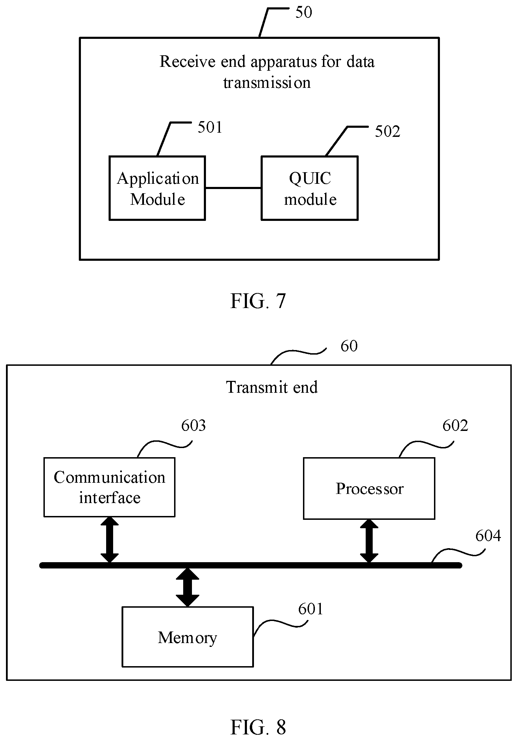

As shown in FIG. 7, an embodiment of this application provides a receive end apparatus 50 for data transmission. The transmit end apparatus 50 for data transmission may be the receive end in the foregoing embodiments, or may include some hardware modules and/or software modules of the receive end in the foregoing embodiments.

An embodiment of the receive end apparatus 50 for data transmission includes a QUIC module 502.

The QUIC module 502 is configured to:
receive, based on an established QUIC connection to a transmit end, a first data frame sent by the transmit end, where the first data frame is obtained by the transmit end by encapsulating a first application message generated by a target application, the first data frame includes a first frame type identifier, the first frame type identifier indicates that an application message included in the first data frame is a complete application message, and target applications run on the transmit end and a receive end; and
obtain the first application message from the first data frame based on the first frame type identifier.

In this embodiment of this application, the QUIC module 502 may be located at a transport layer of the receive end, and the QUIC module 502 may include a QUIC entity.

Optionally, the QUIC module 502 is further configured to:
send first parameter information to the transmit end, where the first parameter information includes a maximum data amount of an application message that the target application of the receive end expects to receive, the first parameter information is used by the transmit end to determine a target threshold, and a size of the first application message does not exceed the target threshold.

Optionally, the QUIC module 502 is further configured to:
transfer the obtained first application message to the target application of the receive end through a first programming interface.

Optionally, the receive end apparatus further includes an application module 501.

The QUIC module 502 is further configured to:
receive, based on the established QUIC connection, a second data frame sent by the transmit end, where the second data frame is obtained by encapsulating a third application message generated by the target application of the transmit end, and the second data frame does not include the first frame type identifier; and
transmit the second data frame to the application module 501.

The application module 501 is configured to:
identify boundaries of the third application message from the second data frame, to obtain the third application message.

The application module 501 may be located at an application layer of the receive end, and the target application of the receive end may run in the application module.

Optionally, the first data frame and the second data frame each include a frame type identifier field, the frame type identifier field of the first data frame includes the first frame type identifier, the frame type identifier field of the second data frame includes a second frame type identifier, and the second frame type is different from the first frame type identifier.

FIG. 8 is a schematic diagram of a possible logical structure of a transmit end 60 according to an embodiment of this application. The transmit end 60 includes a memory 601, a processor 602, a communication interface 603, and a bus 604. Communication connections between the memory 601, the processor 602, and the communication interface 603 are implemented by using the bus 604.

The memory 601 may be a read-only memory (Read-Only Memory, ROM), a static storage device, a dynamic storage device, or a random access memory (Random Access Memory, RAM). The memory 601 may store a program. When the program stored in the memory 601 is executed by the processor 602, the processor 602 and the communication interface 603 are configured to perform steps 101 to 103, steps 202 and 203, and steps 301 to 303 in the foregoing data transmission method embodiments.

The processor 602 may be a central processing unit (Central Processing Unit, CPU), a microprocessor, an application-specific integrated circuit (Application-Specific Integrated Circuit, ASIC), a graphics processing unit (graphics processing unit, GPU), a digital signal processor (Digital Signal Processor, DSP), an application-specific integrated circuit (ASIC), a field programmable gate array (Field Programmable Gate Array, FPGA) or another programmable logic device, a discrete gate or transistor logic device, a discrete hardware component, or any combination thereof. The processor 602 is configured to execute a related program to implement functions that need to be performed by the application module and the QUIC module in the transmit end apparatus for data transmission in embodiments of this application, or perform steps 101 to 103, steps 202 and 203, and steps 301 to 303 in the data transmission method in the method embodiments of this application. The steps of the method disclosed with reference to embodiments of this application may be directly performed and completed by a hardware decoding processor, or may be performed and completed by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory 601. The processor 602 reads information in the memory 601, and performs steps 101 to 103, steps 202 and 203, and steps 301 to 303 in the foregoing data transmission method embodiments by using hardware of the processor 602.

The communication interface 603 uses a transceiver apparatus, for example, including but not limited to a transceiver, to implement communication between the transmit end 60 and another device or a communication network. For example, a first data frame may be sent to a receive end through the communication interface 603.

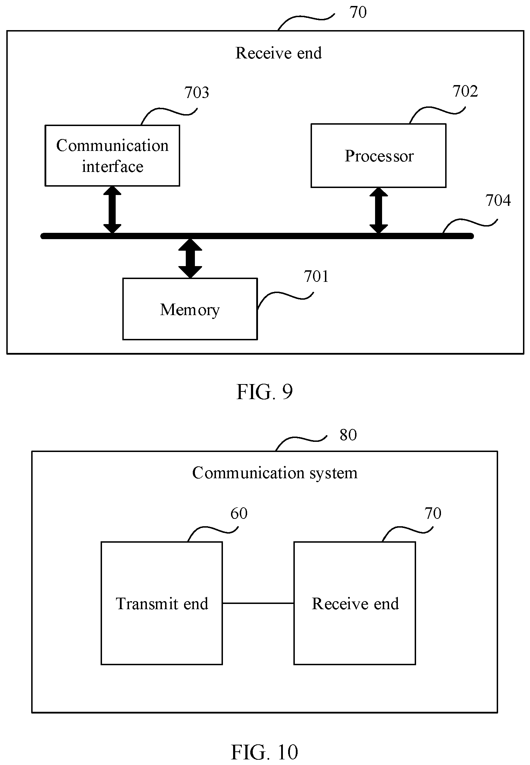

The bus 604 may implement a path for transmitting information between components (for example, the memory 601, the processor 602, and the communication interface 603) of the transmit end 60. The bus 604 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one thick line is used to represent the bus in FIG. 10, but this does not mean that there is only one bus or only one type of bus.

In another embodiment of this application, a computer-readable storage medium is further provided. The computer-readable storage medium stores computer-executable instructions. When a processor of a transmit end executes the computer-executable instructions, the transmit end performs the steps performed by the processor in FIG. 8.

In another embodiment of this application, a computer program product is further provided. The computer program product includes computer-executable instructions, and the computer-executable instructions are stored in a computer-readable storage medium. When a processor of a transmit end executes the computer-executable instructions, the transmit end performs the steps performed by the processor in FIG. 8.

In another embodiment of this application, a chip system is further provided. The chip system includes a processor. The processor is configured to support a transmit end in implementing steps 101 to 103, steps 202 and 203, and steps 301 to 303 in the foregoing data transmission method embodiments. In a possible design, the chip system may further include a memory. The memory is configured to store program instructions and data that are necessary for a data write apparatus. The chip system may include a chip, or may include a chip and another discrete component.

FIG. 9 is a schematic diagram of a possible logical structure of a receive end 70 according to an embodiment of this application. The receive end 70 includes a memory 701, a processor 702, a communication interface 703, and a bus 704. Communication connections between the memory 701, the processor 702, and the communication interface 703 are implemented by using the bus 704.

The memory 701 may be a read-only memory (Read-Only Memory, ROM), a static storage device, a dynamic storage device, or a random access memory (Random Access Memory, RAM). The memory 701 may store a program. When the program stored in the memory 701 is executed by the processor 702, the processor 702 and the communication interface 703 are configured to perform steps 104 and 105, step 201, and steps 304 and 305 in the foregoing data transmission method embodiments.

The processor 702 may be a central processing unit (Central Processing Unit, CPU), a microprocessor, an application-specific integrated circuit (Application-Specific Integrated Circuit, ASIC), a graphics processing unit (graphics processing unit, GPU), a digital signal processor (Digital Signal Processor, DSP), an application-specific integrated circuit (ASIC), a field programmable gate array (Field Programmable Gate Array, FPGA) or another programmable logic device, a discrete gate or transistor logic device, a discrete hardware component, or any combination thereof. The processor 702 is configured to execute a related program to implement functions that need to be performed by the application module and the QUIC module in the receive end apparatus for data transmission in embodiments of this application, or perform steps 104 and 105, step 201, and steps 304 and 305 in the data transmission method in the method embodiments of this application. The steps of the method disclosed with reference to embodiments of this application may be directly performed and completed by a hardware decoding processor, or may be performed and completed by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory 701. The processor 702 reads information in the memory 701, and performs steps 104 and 105, step 201, and steps 304 and 305 in the foregoing data transmission method embodiments by using hardware of the processor 702.

The communication interface 703 uses a transceiver apparatus, for example, including but not limited to a transceiver, to implement communication between the receive end 70 and another device or a communication network. For example, a first data frame may be received from a transmit end through the communication interface 703.

The bus 704 may implement a path for transmitting information between components (for example, the memory 701, the processor 702, and the communication interface 703) of the receive end 70. The bus 704 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one thick line is used to represent the bus in FIG. 10, but this does not mean that there is only one bus or only one type of bus.

In another embodiment of this application, a computer-readable storage medium is further provided. The computer-readable storage medium stores computer-executable instructions. When a processor of a receive end executes the computer-executable instructions, the receive end performs the steps performed by the processor in FIG. 9.

In another embodiment of this application, a computer program product is further provided. The computer program product includes computer-executable instructions, and the computer-executable instructions are stored in a computer-readable storage medium. When a processor of a receive end executes the computer-executable instructions, the receive end performs the steps performed by the processor in FIG. 9.

In another embodiment of this application, a chip system is further provided. The chip system includes a processor. The processor is configured to support a receive end in implementing steps 104 and 105, step 201, and steps 304 and 305 in the foregoing data transmission method embodiments. In a possible design, the chip system may further include a memory. The memory is configured to store program instructions and data that are necessary for a data write apparatus. The chip system may include a chip, or may include a chip and another discrete component.

As shown in FIG. 10, in an embodiment of this application, a communication system 80 is further provided. The communication system 80 includes a transmit end 60 and a receive end 70. The transmit end is configured to perform steps 101 to 103, steps 202 and 203, and steps 301 to 303 in the foregoing data transmission method embodiments, and the receive end 70 is configured to implement steps 104 and 105, step 201, and steps 304 and 305 in the foregoing data transmission method embodiments.

A person of ordinary skill in the art may be aware that, in combination with the examples described in embodiments disclosed in this specification, units and algorithm steps may be implemented by electronic hardware or a combination of computer software and electronic hardware. Whether functions are performed by hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatuses, and units, refer to corresponding processes in the foregoing method embodiments. Details are not described herein again.

In the several embodiments provided in embodiments of this application, it should be understood that the disclosed system, apparatuses, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions in embodiments of this application.

In addition, functional units in embodiments of this application may be integrated into one processing unit, or each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes: any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of embodiments of this application, but are not intended to limit the protection scope of embodiments of this application. The aforementioned embodiments are meant to be examples useful for understanding the invention. The present invention is only defined by the appended claims.

## Claims

1. A data transmission method, applied to a transmit end, wherein the method comprises:
establishing a connection to a receive end using the QUIC transport protocol;
obtaining (101) a first application message generated by a target application, wherein the target application runs on the transmit end, **characterized by**:
encapsulating (102) the first application message to obtain a first data frame, wherein the first data frame comprises a first frame type identifier, and the first frame type identifier indicates that an application message comprised in the first data frame is a complete application message; and
transmitting (103) the first data frame to a receive end based on the established QUIC connection to the receive end, to enable the receive end to determine, based on the first frame type identifier, that the application message comprised in the first data frame is a complete application message, wherein a target application runs on the receive end.

2. The method according to claim 1, wherein the obtaining (101) a first application message generated by a target application comprises:
obtaining the first application message based on a target threshold and application data generated by the target application, wherein a size of the first application message does not exceed the target threshold.

3. The method according to claim 2, wherein the method further comprises:
receiving (202) first parameter information sent by the receive end, wherein the first parameter information comprises a maximum data amount of an application message that the target application of the receive end expects to receive; and
determining (203) the target threshold based on the first parameter information.

4. The method according to claim 2 or 3, wherein the method further comprises:
determining the target threshold based on second parameter information, wherein the second parameter information comprises at least one of: information about a flow control parameter that is sent by the receive end to the transmit end, information about a path maximum transmission unit parameter of the transmit end, and information about a congestion window parameter of the transmit end.

5. The method according to claim 4, wherein the method further comprises:
obtaining updated first parameter information and/or updated second parameter information;
obtaining an updated target threshold based on the updated first parameter information and/or the updated second parameter information; and
obtaining a second application message based on the updated target threshold and the application data generated by the target application, wherein a size of the second application message does not exceed the updated target threshold, and the size of the second application message is different from the size of the first application message.

6. The method according to any one of claims 1 to 5, wherein the encapsulating (102) the first application message to obtain a first data frame comprises:
if the size of the first application message is not greater than that of a send window, encapsulating the first application message to obtain the first data frame, wherein the send window indicates an amount of data that can be sent by the transmit end based on the QUIC.

7. The method according to any one of claims 1 to 6, wherein
the first application message comprises a first message identifier, and the first message identifier indicates to encapsulate the first application message in a form of a complete application message.

8. The method according to any one of claims 1 to 6, wherein
the first application message is transferred from the target application to a QUIC entity at a transport layer through a first programming interface, and an application message transferred through the first programming interface is encapsulated in a form of a complete application message.

9. The method according to any one of claims 1 to 8, wherein the method further comprises:
obtaining (301) a third application message generated by the target application;
encapsulating (302) the third application message to obtain a second data frame, wherein the second data frame does not comprise the first frame type identifier; and
transmitting (303) the second data frame to the receive end based on the established QUIC connection, to enable the receive end to identify boundaries of the third application message from the second data frame, to obtain the third application message.

10. The method according to claim 9, wherein the first data frame comprises a first number, the second data frame comprises a second number, and the first number and the second number correspond to a sequence in which the first application message comprised in the first data frame and the third application message comprised in the second data frame are generated by the target application.

11. The method according to claim 9, wherein the first data frame and the second data frame are comprised in a same QUIC packet.

12. A data transmission method, applied to a receive end, wherein the method comprises:
receiving (104), based on an established QUIC transport protocol connection to a transmit end, a first data frame sent by the transmit end, **characterized in that** the first data frame is obtained by the transmit end by encapsulating a first application message generated by a target application, the first data frame comprises a first frame type identifier, the first frame type identifier indicates that an application message comprised in the first data frame is a complete application message, and target applications run on the transmit end and the receive end; and
obtaining (105) the first application message from the first data frame by determining based on the first frame type identifier whether the first application message included in the received first data frame is a complete application message.

13. A communication device (40, 50, 60, 70), wherein the communication device (40, 50, 60, 70) is configured to implement the method according to any one of claims 1 to 12.

14. A computer-readable storage medium, storing a computer program, wherein when the program is executed by a processor, the method according to any one of claims 1 to 12 is implemented.

15. A communication system (80), comprising a transmit end (60) and a receive end (70), wherein the transmit end (60) is configured to perform the method according to any one of claims 1 to 11, and the receive end (70) is configured to perform the method according to claim 12.

## Patentansprüche

1. Datenübertragungsverfahren, das auf eine Sendeseite angewendet wird, wobei das Verfahren Folgendes umfasst:
Herstellen einer Verbindung zu einer Empfangsseite unter Nutzung des QUIC-Transportprotokolls;
Erhalten (101) einer ersten Anwendungsnachricht, die durch eine Zielanwendung erzeugt wird, wobei die Zielanwendung auf der Sendeseite läuft, **gekennzeichnet durch**:
Einkapseln (102) der ersten Anwendungsnachricht, um einen ersten Datenrahmen zu erhalten, wobei der erste Datenrahmen eine erste Rahmentypkennung umfasst und die erste Rahmentypkennung angibt, dass eine in dem ersten Datenrahmen umfasste Anwendungsnachricht eine vollständige Anwendungsnachricht ist; und
Übertragen (103) des ersten Datenrahmens an eine Empfangsseite basierend auf der hergestellten QUIC-Verbindung zu der Empfangsseite, um zu ermöglichen, dass die Empfangsseite basierend auf der ersten Rahmentypkennung bestimmt, dass die in dem ersten Datenrahmen umfasste Anwendungsnachricht eine vollständige Anwendungsnachricht ist, wobei eine Zielanwendung auf der Empfangsseite läuft.

2. Verfahren nach Anspruch 1, wobei das Erhalten (101) einer ersten Anwendungsnachricht, die durch eine Zielanwendung erzeugt wird, Folgendes umfasst:
Erhalten der ersten Anwendungsnachricht basierend auf einem Zielschwellenwert und Anwendungsdaten, die durch die Zielanwendung erzeugt werden, wobei eine Größe der ersten Anwendungsnachricht den Zielschwellenwert nicht überschreitet.

3. Verfahren nach Anspruch 2, wobei das Verfahren ferner Folgendes umfasst:
Empfangen (202) erster Parameterinformationen, die durch die Empfangsseite gesendet werden, wobei die ersten Parameterinformationen eine maximale Datenmenge einer Anwendungsnachricht umfassen, die die Zielanwendung der Empfangsseite zu empfangen erwartet; und
Bestimmen (203) des Zielschwellenwerts basierend auf den ersten Parameterinformationen.

4. Verfahren nach Anspruch 2 oder 3, wobei das Verfahren ferner Folgendes umfasst: Bestimmen des Zielschwellenwerts basierend auf zweiten Parameterinformationen, wobei die zweiten Parameterinformationen mindestens eines von Folgendem umfassen: Informationen über einen Flusssteuerungsparameter, der durch die Empfangsseite an die Sendeseite gesendet wird, Informationen über einen "Path-Maximum-Transmission-Unit"-Parameter der Sendeseite und Informationen über einen Überlastungsfensterparameter der Sendeseite.

5. Verfahren nach Anspruch 4, wobei das Verfahren ferner Folgendes umfasst:
Erhalten aktualisierter erster Parameterinformationen und/oder aktualisierter zweiter Parameterinformationen;
Erhalten eines aktualisierten Zielschwellenwerts basierend auf den aktualisierten ersten Parameterinformationen und/oder den aktualisierten zweiten Parameterinformationen; und
Erhalten einer zweiten Anwendungsnachricht basierend auf dem aktualisierten Zielschwellenwert und den Anwendungsdaten, die durch die Zielanwendung erzeugt werden, wobei eine Größe der zweiten Anwendungsnachricht den aktualisierten Zielschwellenwert nicht überschreitet und die Größe der zweiten Anwendungsnachricht sich von der Größe der ersten Anwendungsnachricht unterscheidet.

6. Verfahren nach einem der Ansprüche 1 bis 5, wobei das Einkapseln (102) der ersten Anwendungsnachricht, um einen ersten Datenrahmen zu erhalten, Folgendes umfasst: wenn die Größe der ersten Anwendungsnachricht nicht größer als diejenige eines Sendefensters ist, Einkapseln der ersten Anwendungsnachricht, um den ersten Datenrahmen zu erhalten, wobei das Sendefenster eine Menge von Daten, die durch die Sendeseite basierend auf dem QUIC gesendet werden kann, angibt.

7. Verfahren nach einem der Ansprüche 1 bis 6, wobei
die erste Anwendungsnachricht eine erste Nachrichtenkennung umfasst und die erste Nachrichtenkennung angibt, dass die erste Anwendungsnachricht in Form einer vollständigen Anwendungsnachricht einzukapseln ist.

8. Verfahren nach einem der Ansprüche 1 bis 6, wobei
die erste Anwendungsnachricht von der Zielanwendung an eine QUIC-Entität an einer Transportschicht durch eine erste Programmierschnittstelle transferiert wird und eine durch die erste Programmierschnittstelle transferierte Anwendungsnachricht in Form einer vollständigen Anwendungsnachricht eingekapselt wird.

9. Verfahren nach einem der Ansprüche 1 bis 8, wobei das Verfahren ferner Folgendes umfasst:
Erhalten (301) einer dritten Anwendungsnachricht, die durch die Zielanwendung erzeugt wird;
Einkapseln (302) der dritten Anwendungsnachricht, um einen zweiten Datenrahmen zu erhalten, wobei der zweite Datenrahmen die erste Rahmentypkennung nicht umfasst; und
Übertragen (303) des zweiten Datenrahmens an die Empfangsseite basierend auf der hergestellten QUIC-Verbindung, um zu ermöglichen, dass die Empfangsseite Grenzen der dritten Anwendungsnachricht aus dem zweiten Datenrahmen identifiziert, um die dritte Anwendungsnachricht zu erhalten.

10. Verfahren nach Anspruch 9, wobei der erste Datenrahmen eine erste Zahl umfasst, der zweite Datenrahmen eine zweite Zahl umfasst und die erste Zahl und die zweite Zahl einer Sequenz entsprechen, in der die erste Anwendungsnachricht, die in dem ersten Datenrahmen umfasst ist, und die dritte Anwendungsnachricht, die in dem zweiten Datenrahmen umfasst ist, durch die Zielanwendung erzeugt werden.

11. Verfahren nach Anspruch 9, wobei der erste Datenrahmen und der zweite Datenrahmen in einem selben QUIC-Paket umfasst sind.

12. Datenübertragungsverfahren, das auf eine Empfangsseite angewendet wird, wobei das Verfahren Folgendes umfasst:
Empfangen (104), basierend auf einer hergestellten QUIC-Transportprotokollverbindung zu einer Sendeseite, eines ersten Datenrahmens, der durch die Sendeseite gesendet wird, **dadurch gekennzeichnet, dass**
der erste Datenrahmen durch die Sendeseite durch Einkapseln einer ersten Anwendungsnachricht, die durch eine Zielanwendung erzeugt wird, erhalten wird, der erste Datenrahmen eine erste Rahmentypkennung umfasst, die erste Rahmentypkennung angibt, dass eine Anwendungsnachricht, die in dem ersten Datenrahmen umfasst ist, eine vollständige Anwendungsnachricht ist, und Zielanwendungen auf der Sendeseite und der Empfangsseite laufen; und
Erhalten (105) der ersten Anwendungsnachricht aus dem ersten Datenrahmen durch Bestimmen basierend auf der ersten Rahmentypkennung, ob die erste Anwendungsnachricht, die in dem empfangenen ersten Datenrahmen enthalten ist, eine vollständige Anwendungsnachricht ist.

13. Kommunikationsvorrichtung (40, 50, 60, 70), wobei die Kommunikationsvorrichtung (40, 50, 60, 70) konfiguriert ist, das Verfahren nach einem der Ansprüche 1 bis 12 zu implementieren.

14. Computerlesbares Speichermedium, das ein Computerprogramm speichert, wobei, wenn das Programm durch einen Prozessor ausgeführt wird, das Verfahren nach einem der Ansprüche 1 bis 12 implementiert wird.

15. Kommunikationssystem (80), das eine Sendeseite (60) und eine Empfangsseite (70) umfasst, wobei die Sendeseite (60) konfiguriert ist, das Verfahren nach einem der Ansprüche 1 bis 11 durchzuführen, und die Empfangsseite (70) konfiguriert ist, das Verfahren nach Anspruch 12 durchzuführen.

## Revendications

1. Procédé de transmission de données, appliqué à une extrémité de transmission, le procédé comprenant :
l'établissement d'une connexion avec une extrémité de réception à l'aide de protocole de transport QUIC ;
l'obtention (101) d'un premier message d'application généré par une application cible, dans lequel l'application cible s'exécute sur l'extrémité de transmission, **caractérisé par** :
l'encapsulation (102) du premier message d'application pour obtenir une première trame de données, dans lequel la première trame de données comprend un premier identifiant de type de trame, et le premier identifiant de type de trame indique qu'un message d'application compris dans la première trame de données est un message d'application complet ; et
la transmission (103) de la première trame de données à une extrémité de réception sur la base de la connexion QUIC établie avec l'extrémité de réception, pour permettre à l'extrémité de réception de déterminer, sur la base du premier identifiant de type de trame, que le message d'application compris dans la première trame de données est un message d'application complet, dans lequel une application cible s'exécute sur l'extrémité de réception.

2. Procédé selon la revendication 1, dans lequel l'obtention (101) d'un premier message d'application généré par une application cible comprend :
l'obtention du premier message d'application sur la base d'un seuil cible et de données d'application générées par l'application cible, dans lequel une taille du premier message d'application ne dépasse pas le seuil cible.

3. Procédé selon la revendication 2, le procédé comprenant en outre :
la réception (202) de premières informations de paramètre envoyées par l'extrémité de réception, dans lequel les premières informations de paramètre comprennent une quantité de données maximale d'un message d'application que l'application cible de l'extrémité de réception s'attend à recevoir ; et
la détermination (203) du seuil cible sur la base des premières informations de paramètre.

4. Procédé selon la revendication 2 ou 3, le procédé comprenant en outre :
la détermination du seuil cible sur la base de secondes informations de paramètre, dans lequel les secondes informations de paramètre comprennent au moins l'un de : des informations sur un paramètre de commande de flux qui est envoyé par l'extrémité de réception à l'extrémité de transmission, des informations sur un paramètre d'unité de transmission maximale de chemin de l'extrémité de transmission, et des informations sur un paramètre de fenêtre de congestion de l'extrémité de transmission.

5. Procédé selon la revendication 4, le procédé comprenant en outre :
l'obtention de premières informations de paramètre mises à jour et/ou de secondes informations de paramètre mises à jour ;
l'obtention d'un seuil cible mis à jour sur la base des premières informations de paramètre mises à jour et/ou des secondes informations de paramètre mises à jour ; et
l'obtention d'un deuxième message d'application sur la base du seuil cible mis à jour et des données d'application générées par l'application cible, dans lequel une taille du deuxième message d'application ne dépasse pas le seuil cible mis à jour, et la taille du deuxième message d'application est différente de la taille du premier message d'application.

6. Procédé selon l'une quelconque des revendications 1 à 5, dans lequel l'encapsulation (102) du premier message d'application pour obtenir une première trame de données comprend :
si la taille du premier message d'application n'est pas supérieure à celle d'une fenêtre d'envoi, l'encapsulation du premier message d'application pour obtenir la première trame de données, dans lequel la fenêtre d'envoi indique une quantité de données qui peuvent être envoyées par l'extrémité de transmission sur la base du QUIC.

7. Procédé selon l'une quelconque des revendications 1 à 6, dans lequel le premier message d'application comprend un premier identifiant de message, et le premier identifiant de message indique d'encapsuler le premier message d'application sous la forme d'un message d'application complet.

8. Procédé selon l'une quelconque des revendications 1 à 6, dans lequel
le premier message d'application est transféré de l'application cible à une entité QUIC au niveau d'une couche de transport par l'intermédiaire d'une première interface de programmation, et un message d'application transféré par l'intermédiaire de la première interface de programmation est encapsulé sous la forme d'un message d'application complet.

9. Procédé selon l'une quelconque des revendications 1 à 8, le procédé comprenant en outre :
l'obtention (301) d'un troisième message d'application généré par l'application cible ;
l'encapsulation (302) du troisième message d'application pour obtenir une seconde trame de données, dans lequel la seconde trame de données ne comprend pas le premier identifiant de type de trame ; et
la transmission (303) de la seconde trame de données à l'extrémité de réception sur la base de la connexion QUIC établie, pour permettre à l'extrémité de réception d'identifier des limites du troisième message d'application à partir de la seconde trame de données, pour obtenir le troisième message d'application.

10. Procédé selon la revendication 9, dans lequel la première trame de données comprend un premier nombre, la seconde trame de données comprend un second nombre, et le premier nombre et le second nombre correspondent à une séquence dans laquelle le premier message d'application compris dans la première trame de données et le troisième message d'application compris dans la seconde trame de données sont générés par l'application cible.

11. Procédé selon la revendication 9, dans lequel la première trame de données et la seconde trame de données sont comprises dans un même paquet QUIC.

12. Procédé de transmission de données, appliqué à une extrémité de réception, le procédé comprenant :
la réception (104), sur la base d'une connexion de protocole de transport QUIC établie avec une extrémité de transmission, d'une première trame de données envoyée par l'extrémité de transmission, **caractérisé en ce que**
la première trame de données est obtenue par l'extrémité de transmission en encapsulant un premier message d'application généré par une application cible, la première trame de données comprend un premier identifiant de type de trame, le premier identifiant de type de trame indique qu'un message d'application compris dans la première trame de données est un message d'application complet, et des applications cibles s'exécutent sur l'extrémité de transmission et l'extrémité de réception ; et
l'obtention (105) du premier message d'application à partir de la première trame de données en déterminant, sur la base du premier identifiant de type de trame, si le premier message d'application inclus dans la première trame de données reçue est un message d'application complet.

13. Dispositif de communication (40, 50, 60, 70), le dispositif de communication (40, 50, 60, 70) étant configuré pour mettre en œuvre le procédé selon l'une quelconque des revendications 1 à 12.

14. Support de stockage lisible par ordinateur, sur lequel est stocké un programme informatique, dans lequel, lorsque le programme est exécuté par un processeur, le procédé selon l'une quelconque des revendications 1 à 12 est mis en œuvre.

15. Système de communication (80), comprenant une extrémité de transmission (60) et une extrémité de réception (70), dans lequel l'extrémité de transmission (60) est configurée pour réaliser le procédé selon l'une quelconque des revendications 1 à 11, et l'extrémité de réception (70) est configurée pour réaliser le procédé selon la revendication 12.
